# EUROPEAN PATENT SPECIFICATION

(11) **EP 4 248 111 B1**
(45) Date of publication and mention of the grant of the patent: **17.09.2025**
(21) Application number: 21904639.8
(22) Date of filing: 22.11.2021
(51) Int. Cl.: F16J 1/00, B23K 15/00, B23K 26/34, B23K 26/00, F16J 1/01, B23K 101/00, B23K 103/10, B23K 103/18

(54) **PISTON INCLUDING SUPERALLOY BASED OVERLAY, AND METHOD OF MANUFACTURING A PISTON FOR A RECIPROCATING PISTON ENGINE**
KOLBEN MIT EINER AUF SUPERLEGIERUNG BASIERENDEN AUFTRAGUNG UND VERFAHREN ZUR HERSTELLUNG EINES KOLBENS FÜR EINEN HUBKOLBENMOTOR
PISTON COMPRENANT UN REVÊTEMENT À BASE DE SUPERALLIAGE, ET MÉTHODE DE FABRICATION D'UN PISTION POUR UN MOTEUR À PISTONS ALTERNATIFS

(30) Priority: 20.11.2020 US 202063116188 P
(43) Date of publication of application: 27.09.2023
(73) Proprietor: Cummins, Inc., Columbus, Indiana 47201 (US)
(72) Inventor: HOYE, Robert Earl, Columbus, Indiana 47201 (US); JOSHI, Sameehan Shrikant, Dallas, Texas 72535 (US); SAVAGE, Howard S., Columbus, Indiana 47203 (US)
(74) Representative: Cleveland Scott York
(86) International application number: PCT/US2021/072537
(87) International publication number: WO 2022/140722

(56) References cited:
- JP-A- H03 267 553
- JP-A- H07 139 424
- JP-A- H11 200 946
- US-A1- 2011 226 390
- US-A1- 2013 232 749

## Description

The present invention relates to pistons including superalloy overlays and to a method of manufacturing pistons including superalloy overlays, see claims 1 and 11.

### BACKGROUND

A number of coatings and coating processes have been proposed for internal combustion engine pistons. Heretofore, such proposals have suffered from a number of drawbacks, disadvantages, and unmet needs including those respecting durability and efficacy. Conventional proposals may result in undesirable hardening of portions of a piston to which a coating is applied. Such hardening increases the risk of coating-piston separation or other coating failures during operation of a piston in an internal combustion engine. Conventional proposals may require post-coating processing such as post-coating heating to attempt to compensate for such undesirable hardening which increases the complexity, expense, and time required to produce desirable products. Furthermore, such post-coating processes themselves produce undesirable changes in the composition of a coated piston including oxidation and other distortion resulting from post-coating heating or other post-coating operations. There remains a significant need for the unique apparatuses, systems, and methods disclosed herein. D1 (JPH07139424, describing the preamble of claims 1 and 11) relates to lowering the Fe dilution ratio from a base material so as to reduce required padding thickness, to provide a high quality reinforced piston at a low cost by overlaying a nickel base alloy to the upper surface of the piston crown forming an internal combustion engine, by plasma powder welding method. D2 (US2013232749) relates to a method of build-up welding including depositing of a weld material on a substrate in a series of weld passes in side-by-side relation to form a first weld layer, wherein substantially all weld passes forming the first weld layer are deposited in a first pass direction. D3 (JPH03267553) relates to preventing the coagulation of Al alloy from the surface of a piston ring groove to the surface of a piston ring by forming a plated layer made of Ni-W-B on the surface of the ring of a piston through a nonelectrolytic plating method. D4 (JPH11200946) relates to a piston made up by a low chrome molybdenum steel containing, for example, less than 1 wt.% or so in chrominum and less than 0.5 wt.% or so in molybdenum. In order to deter any high temperature corrosion in a piston touch-fire surface of the piston, high nickel radical alloy steel, containing more than 58 wt.% in nickel, 20 to 23 wt.% in chromium and 8 to 10 wt.% in molybdenum is made padding in two layers over the whole surface of the top face of the piston. D5 (US2011226390) relates to a method of welding a gas turbine engine substrate composed of a gamma prime precipitation strengthened nickel based superalloy, including the steps of: applying weld beads on the substrate to form a continuous layer the thickness of the weld beads; using a filler material made of a first material exhibiting comparable strength and ductility as the substrate, and a second material exhibiting greater ductility than the substrate; and creating crack propagation mitigating regions within the continuous layer by increasing the percentage of the second material in the crack propagation mitigating regions over the percentage of the second material in the remainder of the continuous layer.

### DISCLOSURE OF EXAMPLE EMBODIMENTS

For the purposes of clearly, concisely, and exactly describing example embodiments of the present invention, the manner, and process of making and using the same, and to enable the practice, making and use of the same, reference will now be made to certain example embodiments, including those illustrated in the figures, and specific language will be used to describe the same. It shall nevertheless be understood that no limitation of the scope of the invention is thereby created, and that the invention includes and protects such alterations, modifications, and further applications of the example embodiments as would occur to one skilled in the art.

### SUMMARY OF THE DISCLOSURE

According to a first aspect of the present invention, a piston for a reciprocating piston engine is defined in claim 1.

According to a second aspect to the present invention, a method of manufacturing a piston for a reciprocating piston engine is defined in claim 11.

Further preferred embodiments of the invention according to the first and second aspects of the present invention are defined in the dependent claims.

Further embodiments, forms, objects, features, advantages, aspects, and benefits shall become apparent from the following description and drawings.

### BRIEF DESCRIPTION OF THE DRAWINGS

Fig. 1 is a side view illustrating certain aspects of an example piston.
Fig. 1A is a detailed view of a portion of the example piston of Fig. 1.
Fig. 1B is a perspective view of a portion of the example piston of Fig. 1.
Fig. 2A is a sectional view of a portion of the example piston of Fig. 1 in an example state of manufacture
Fig. 2B is a sectional view of a portion of the example piston of Fig. 1 in another example state of manufacture.
Fig. 2C is a sectional view of a portion of the example piston of Fig. 1 in another example state of manufacture.
Fig. 3 is a schematic diagram illustrating certain aspects of an example multi-layer cladding.
Fig. 4 is a schematic diagram illustrating certain aspects of an example multi-layer cladding.
Fig. 5 is a schematic diagram illustrating certain aspects of an example multi-layer cladding.
Fig. 6 is a schematic diagram illustrating certain aspects of an example multi-layer cladding.
Fig. 7 is a schematic diagram illustrating certain aspects of an example multi-layer cladding.
Fig. 8 is a flowchart illustrating certain aspects of an example directed energy deposition (DED) manufacturing process.
Fig. 9 is a schematic diagram illustrating certain aspects of an example DED manufacturing system.
Fig. 10 is a schematic diagram illustrating certain aspects of an example DED manufacturing system.

### DETAILED DESCRIPTION OF EXAMPLE EMBODIMENTS

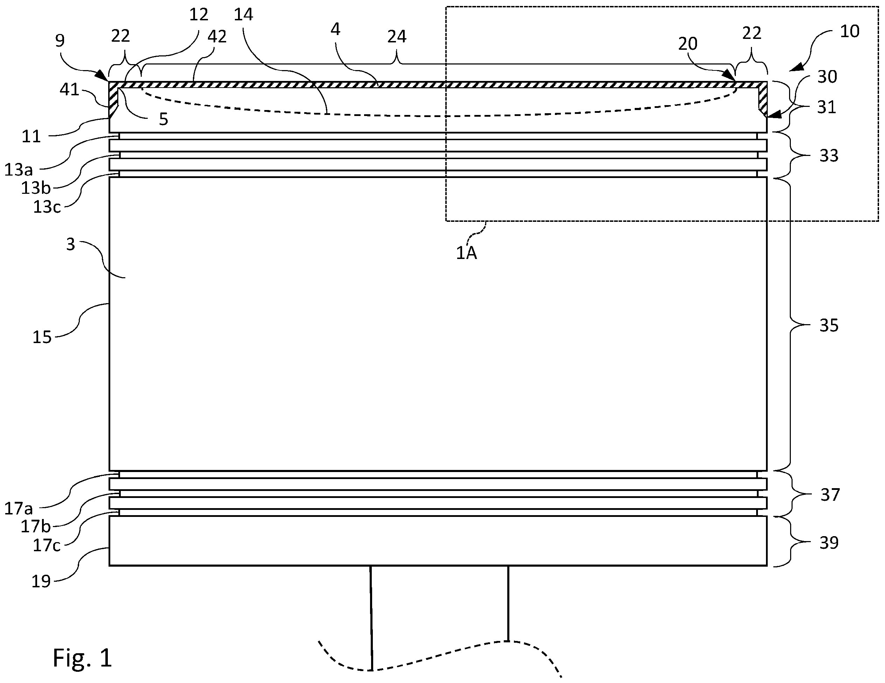

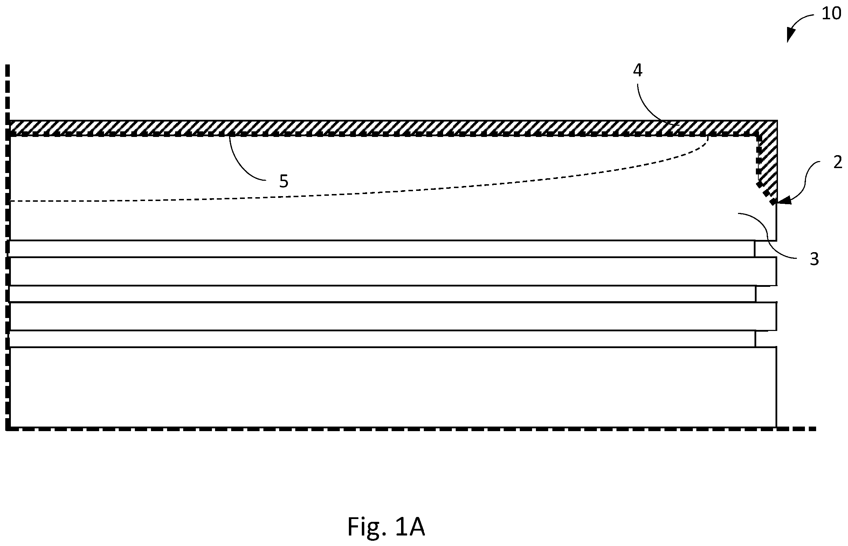

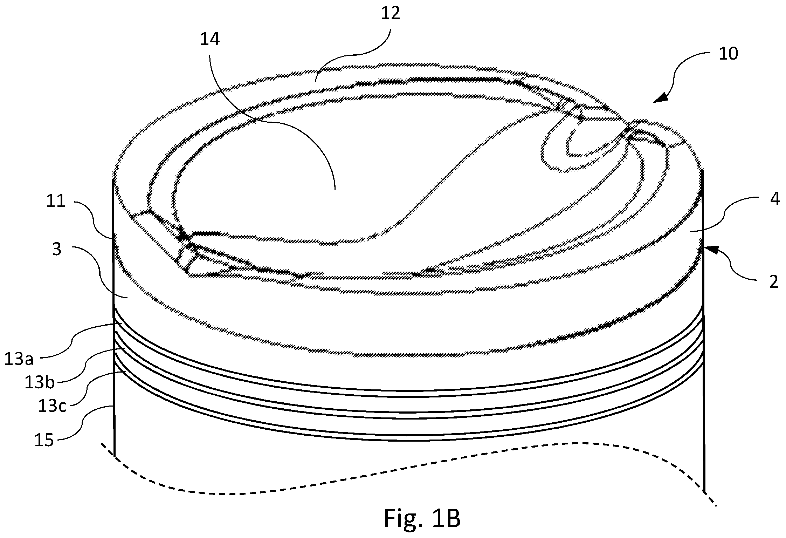

With reference to Figs. 1, 1A, and 1B, there is illustrated a piston 10. The piston 10 comprises a crown 12, a bowl 14, an upper land 11, upper ring grooves 13a, 13b, 13c, a middle land 15, lower ring grooves 17a, 17b, 17c, and a lower land 19 which define a plurality of regions of an exterior surface 9 of the piston 10. The exterior surface 9 comprises a top surface portion 20 and a side surface portion 30 extending downward from the top surface portion 20. The top surface portion 20 comprises a crown surface portion 22 and a bowl surface portion 24 extending inward from the crown surface portion 22 and forming a piston bowl. The side surface portion 30 comprises an upper land surface portion 31 extending downward from the crown surface portion 22, a ring groove surface portion 33 extending downward from the upper land surface portion 31, a skirt surface portion 35 extending downward from the ring groove surface portion 33, a second ring groove surface portion 37 extending downward from the skirt surface portion 35, and a lower land surface portion 39 extending downward from the second ring groove surface portion 37.

In the illustrated example, the piston 10 is adapted and configured for use in an opposed-piston, two-stroke diesel engine. In other embodiments, the piston 10 may be differently adapted and configured for use in other types of engines, for example, four-stroke diesel engines with non-opposed reciprocating pistons. In some such other embodiments, piston 10 may not include the middle land 15, the lower ring grooves 17a, 17b, 17c, and the lower land 19. In some such other embodiments, piston 10 may include a piston skirt instead of the middle land 15, the lower ring grooves 17a, 17b, 17c, and the lower land 19. A number of other variations and modifications in piston arrangement, features, forms, geometries, structures, and surfaces are contemplated, as will occur to one of skill in the art with the benefit of the present disclosure.

The piston 10 includes a piston body 2 comprising a steel piston form 3, a superalloy overlay 4 provided on a portion of the steel piston form 3, and a weld interface 5 coupling the superalloy overlay 4 and the steel piston form 3. The steel piston form 3 may be, for example, a steel forging, a steel casting, or steel form produced using other techniques suitable to provide the steel piston form 3 in the net shape of a piston suitable for use in an internal combustion engine. The steel piston form 3 may comprise 4140 steel or other steel compositions suitable for use in pistons of a reciprocating piston engine.

It shall be appreciated that other embodiment may comprise an aluminum piston form and that the disclosure relating to the steel piston form 3, operations performed thereon, and overlay material provided thereon also applies to such embodiments with potential variation in the composition of the superalloy overlay for compatibility with an underlying aluminum piston form. An aluminum piston form according to the present disclosure may be, for example, an aluminum forging, an aluminum casting, or an aluminum form produced using other techniques suitable to provide an aluminum piston form in the net shape of a piston suitable for use in an internal combustion engine. An aluminum piston form according to the present disclosure preferably comprises a heat-treatable aluminum alloy composition that can be hardened and tempered in accordance with the operations and techniques disclosed herein, for example, 2xxx, 6xxx, or 7xxx series wrought aluminum alloys, certain 4xxx series wrought aluminum alloys, 2xx.x, 3xx.x, 4xx.x, or 7xx.x series cast aluminum alloys, or other heat treatable aluminum alloys as will occur to one of skill in the art with the benefit of the present disclosure.

The superalloy overlay 4 may comprise a number of superalloy materials including, for example, a nickel-based superalloy such as unified numbering system (UNS) designation N06625, which is commercially available as INCONEL 625^{™}. The superalloy overlay 4 may additionally or alternatively comprise a number of other superalloy materials such as titanium (Ti), iron-chromium-aluminum (FeCrAl), grade HK30 stainless steel, grade CF8C plus stainless steel, tungsten carbide, other metal matrix composite materials or ceramic-metal matrix composite materials, and superalloy materials commercially available as RENE 41^{™}, RENE 65^{™}, RENE 80^{™}, RENE 108^{™}, UDIMET 500^{™}, UDIMET 600^{™}, UDIMET 700^{™}, ASTROLOGY^{™}, ATI M252^{™}, INCONEL 718^{™}, INCONEL 718+^{™}, INCONEL 713C^{™}, HASTELLOY X^{™}, WASPALOY^{™}, HAYNES 282^{™}, or other superalloy materials as will occur to one of skill in the art.

It shall be appreciated that superalloy overlay materials according to the present disclosure comprise a class of metal alloy materials having technical effects of providing high-temperature oxidation-resistance and/or corrosion-resistance, for example, oxidation-resistance and/or corrosion resistance at 700 degrees F (371 degrees C) or greater, that is superior to or greater than the oxidation-resistance of a substrate material on which they are overlayed (e.g., a 4140 steel material substrate or other substrate material referenced herein).

The superalloy overlay 4 and weld interface 5 may be provided on the piston form 3 using directed energy deposition (DED) welding techniques in which an energy beam, such as a laser beam or an electron beam, is directed to a substrate material concurrently or in combination with a feedstock material, such as a superalloy powder or superalloy wire feedstock, to directly weld the feedstock with the substrate material upon application. It is also contemplated that other direct welding techniques may be utilized, such as gas metal arc welding (GMAW) including metal inert gas (MIG) welding and metal active gas (MAG) welding, gas tungsten arc welding (GTAW) or tungsten inert gas (TIG) welding, and other direct welding techniques as will occur to one of skill in the art with the benefit of the present disclosure. It shall be appreciated that the foregoing direct welding techniques may also be utilized for other superalloy overlays, weld interfaces, and piston forms disclosed herein including those with material compositions differing from superalloy overlay 4, weld interface 5, and/or piston form 3.

It shall be appreciated that direct welding techniques according to the present disclosure may impart preferred structural attributes and features and that pistons including direct weld interfaces according to the present disclosure may comprise such structural attributes and features. Such structural attributes and features may comprise crystalline, microcrystalline, structural, or microstructural properties of a piston form, superalloy overlay, and/or weld interface. Some such structural attributes and features comprise a metallurgical bond between a piston form substrate material and a superalloy material overlay with the technical effect of improving the durability, heat resistance, and/or resistance to separation of the superalloy overlay and the underlying substrate.

In some embodiments, the superalloy overlay 4 may comprise a first weld layer comprising a plurality of adjoining weld beads comprising superalloy material metallurgically bonded with an underlying substrate of a piston form at a weld interface. In some forms, the plurality of adjoining weld beads may comprise contiguous adjoining weld beads providing a common superalloy weld layer metallurgically bonded with an underlying substrate of a piston form. In some forms, the plurality of adjoining weld beads may comprise partially overlapping adjoining weld beads providing a common superalloy weld layer metallurgically bonded with an underlying substrate of a piston form. In addition to being metallurgically bonded with an underlying substrate, adjoining weld beads may be metallurgically bonded with one or more neighboring adjoining weld beads.

In some forms, the plurality of adjoining weld beads may comprise at least in part a welded combination of a superalloy overlay material and an underlying steel substrate of the steel piston form 3. In some such forms, the plurality of adjoining weld beads may comprise as least in part a melted and re-frozen combination of a superalloy overlay material and an underlying steel substrate of the steel piston form 3. Unless indicated to the contrary, references herein to an adjoining weld bead or adjoining weld beads shall be understood to refer to adjoining weld beads comprising superalloy material and may also be referred to as an adjoining superalloy weld bead or adjoining superalloy weld beads.

In some forms, the superalloy overlay 4 may comprise a plurality of adjoining superalloy temper weld beads which may be provided using a temper bead welding technique and in which a heat affected zone of the underlying substrate, such as the steel piston form 3 or another piston form is initially hardened and thereafter tempered by the temper bead welding technique. In some such forms, the underlying substrate may comprise heat affected zones of the weld interface and/or the substrate material of a piston form underlying the weld interface 5 are tempered or softened by the arrangement, structure, orientation, and/or order of formation of a plurality of adjoining weld beads. It shall be appreciated that a heat affected zone or heat affected zones refer to structural material characteristics of being initially hardened from a relatively tempered or softened state and thereafter being tempered or softened (e.g., re-tempered or re-softened). It shall be further appreciated that tempering or softening according to the present disclosure may include phase transitions to a martensitic state or other tempering or softening operations.

In some forms, a first layer of adjoining weld beads may be at least adjoining, i.e., formed with substantially no spacing between neighboring adjoining weld beads. In some such forms, the first layer of adjoining weld beads may be at least partially overlapping, i.e. formed at least in part over or overlapping with neighboring adjoining weld beads. For example, a first plurality of adjoining weld beads of a first superalloy weld layer disposed on a piston form may partially overlap respective neighboring weld beads or may be formed in partial overlap with respective neighboring weld beads. The technical effects of such structuring may comprise tempering or softening heat affected zones underlying respective weld beads by virtue of the positioning, location, or spacing of adjoining weld beads. For example, a heat affected zone may be initially hardened by formation of a given weld bead, and thereafter tempered or softened by formation of an adjoining weld bead.

In some forms, a first layer of adjoining weld beads may be ordinally formed, i.e., formed in a specific order or sequence. In some forms, the order or sequence may start at an interface between a superalloy overlay and a substrate material and proceed away from or inward from the interface. The technical effects of such structuring comprise tempering or softening heat affected zones underlying respective weld beads by virtue of the order of adjoining weld beads. For example, a heat affected zone may be initially hardened by formation of a given weld bead, and thereafter the hardening may be effectively driven, moved, or walked away from the interface by ordered or sequenced formation of adjoining weld bead and attendant tempering or softening of the heat affected zone.

A plurality of weld layers of adjoining weld beads is provided. Some such forms comprise at least two weld layers of adjoining weld beads. Some such forms may comprise at least three weld layers of adjoining weld beads. The technical effects of such structuring comprise tempering or softening heat affected zones underlying respective weld beads of a first weld layer by virtue of the relative positioning and spacing of layers of adjoining weld beads. In some forms, heat affected zones underlying a first layer of adjoining weld beads disposed on an underlying substrate are tempered or softened by the disposition and positioning of a second layer of adjoining weld beads disposed on the first layer. In some forms, the heat affected zones may further be tempered or softened by the disposition and positioning of a third layer of adjoining weld beads disposed on the second layer.

In some forms, a second layer of adjoining weld beads disposed on a first layer of adjoining weld beads may be at least adjoining or contiguous, i.e., formed with substantially no spacing between neighboring adjoining weld beads. In some such forms the second layer of adjoining weld beads may be at least partially overlapping, i.e. formed at least in part over or overlapping with neighboring adjoining weld beads. For example, a second plurality of adjoining weld beads of a second superalloy weld layer disposed on a first superalloy weld layer may partially overlap respective neighboring weld beads or may be formed in partial overlap with respective neighboring weld beads. The technical effects of such structuring may comprise tempering or softening heat affected zones underlying respective weld beads by virtue of the positioning, location, or spacing of adjoining weld beads. For example, a heat affected zone may be initially hardened by formation of a given weld bead, and thereafter tempered or softened by formation of an adjoining weld bead.

A second layer of adjoining weld beads is ordinally formed, i.e., formed in a specific order or sequence. In some forms, the order or sequence may start at an interface between a superalloy overlay and a substrate material and proceed away from or inward from the interface. The technical effects of such structuring comprise tempering or softening heat affected zones underlying respective weld beads by virtue of the order of adjoining weld beads. For example, hardening of a heat affected zone may be further effectively, driven, moved, or walked away from the interface by the order of tempering or softening by ordered or sequenced formation of adjoining weld bead.

A plurality of superalloy weld layers each comprising a plurality of adjoining weld beads providing temper beading in which a heat affected zone of the underlying substrate of the steel piston form 3 is initially hardened and thereafter tempered by a first welding operation providing a first layer, and which a second heat affected zone of the underlying substrate of the steel piston form 3 (which may comprise at least a portion of or may overlap with the first heat affected zone) is further tempered by a second welding operation providing a second layer.

The technical effects of such arrangement, positioning, and/or ordering of two or more weld layers of adjoining weld beads comprise tempering or softening heat affected zones underlying a first layer of weld beads by virtue of the arrangement, positioning, and/or ordering of one or more layers of weld beads on or above the first layer. For example, a heat affected zone may be initially hardened by formation of a given weld bead, and thereafter the hardening may be moved or walked away vertically upward or out of the underlying substrate by the spacing and positioning of one or more layers of weld beads on or above the first layer.

It shall be appreciated that direct weld techniques according to the present disclosure impart preferably particular structural attributes to a weld interface and that weld interfaces according to the present disclosure comprise structural features that are preferred over those resulting from other techniques such as spray coating, or two-step processes, for example, those including applying a coating and subsequently treating the coating with a high energy laser.

In some embodiments, welding of a first overlay layer *(e.g.,* a plurality of weld beads of a first overlay layer) onto a piston form initially hardens and thereafter tempers first heat affected zones of the underlying piston form. For example, welding any given weld bead of a plurality of adjoining weld beads of a first overlay layer onto a piston form initially hardens a respective first heat affected zone underlying the given weld bead. Thereafter, welding of another weld bead adjoining the given weld bead tempers at least a portion of the first heat affected zone that was previously hardened. The successive hardening and tempering may be repeated successively for a plurality of adjoining weld beads. Welding a second overlay layer onto the first overlay layer (*e.g.,* a weld bead of a second overlay layer on top of the first overlay layer) may temper a second heat affected zone of the underlying piston form but may be sufficiently spaced apart from the underlying piston form so as not to further harden the underlying piston form. The second heat affected zone may be the same as or may partially overlap the first heat affected zone. Depending on the composition of the first overlay layer, application of the second overlay layer may further temper the first overlay layer (*e.g.,* for hardenable and temperable overlay compositions which may be utilized in the first layer).

In some forms, after welding of the second overlay layer, application of directed energy to the second weld layer without the addition of superalloy material, which may be referred to as blank welding, may be used to further temper at least a portion of the second heat affected zone.

In some forms, welding a third overlay layer (*e.g.,* a weld bead of a third overlay layer on top of the second overlay layer) tempers a third heat affected zone but is sufficiently spaced apart from the underlying piston form so as not to further harden the underlying piston form. The third heat affected zone may be the same as or may partially overlap one or both of the first heat affected zone and the second heat affected zone. Depending on the composition of the second overlay layer, application of the third overlay layer potentially hardens and tempers the second overlay layer (*e.g.,* for hardenable and temperable overlay compositions which may be utilized in the second layer). Depending on the composition of the first overlay layer, application of the third overlay layer potentially tempers the first overlay layer and may do so without hardening the first overlay layer.

In some forms of the foregoing embodiments, after deposition of the first overlay layer, deposition of subsequent layers are not close enough to underlying piston form to create a rehardened and untempered heat affected zone in the piston form. In some forms of such embodiments, after deposition of a second overlay layer on a first overlay layer, deposition of a third overlay layer is not close enough to the first layer to create a rehardened and untempered zone in the first layer. In some forms of such embodiments, a heat affected zone of a weld bead of a first overlay layer may also be tempered by application of an adjoining weld bead of the first layer. In some forms of such embodiments, additional layers may be provided on top of the third layer and the effects on underlying layers may repeat for heat affected zones of increasing elevation corresponding to the build-up of successive layers.

The overlay 4 defines at least a portion of the exterior surface 9 of the piston body 2. In the illustrated example, the overlay 4 defines substantially the entire top surface portion 20 including the crown surface portion 22 and the bowl surface portion 24, and at least a portion of the side surface portion 30 including a portion of the land surface portion 31. In other embodiments, the overlay 4 defines at least a portion of the top surface portion 20, which may comprise a lesser extent of the top surface portion 20 than in the illustrated example, and at least a portion of the side surface portion 30, which may comprise a greater or lesser extent of the side surface portion 30 than in the illustrated example.

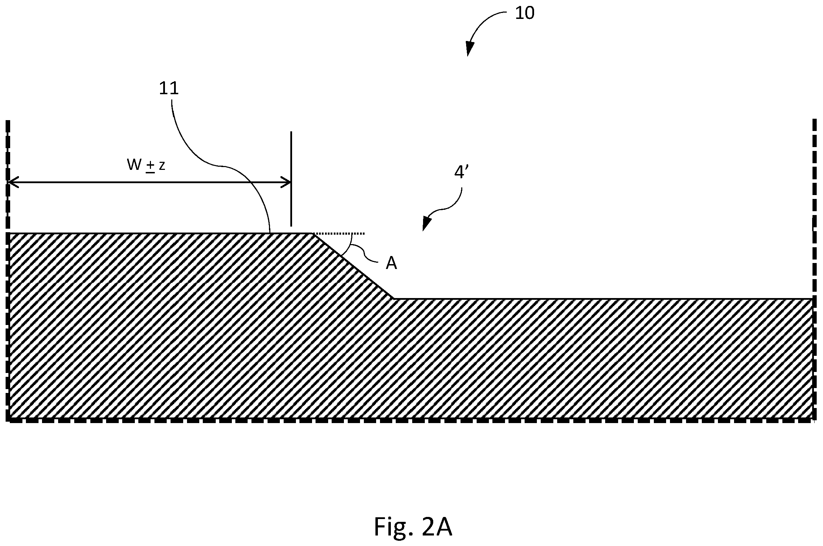

With additional reference to Figs. 2A-2C, the superalloy overlay 4 comprises a plurality of layers 40 which are directly welded to a relief cut 4' formed in an exterior surface of the upper land 11 of the piston 10. In some forms, the relief cut 4' may be defined or provided in a piston form of piston 10 (e.g., steel piston form 3, or another piston form) by cutting, grinding, milling, and/or polishing operations. In some forms, the relief cut 4' may be defined or provided in the piston form by casting or forging of the piston form. In some forms, the relief cut 4' may be defined or provided in the piston form by a combination of casting or forging of the piston form and post-casting or post-forging cutting, grinding, milling, and/or polishing operations.

In the illustrated example, the plurality of layers 40 includes three layers 41, 42, 43. In other embodiments, the plurality of layers 40 may include a greater or lesser number of layers. In some embodiments, a single layer may be provided rather than a plurality of layers. Each of the plurality of layers 40 comprises a plurality of DED weld beads. Layer 41 includes DED weld beads 41a, 41b, ... 41n among other weld beads. Layer 42 includes DED weld beads 42a, 42b, ... 42n among other weld beads. Layer 43 includes DED weld beads 43a, 43b, ... 43n among other weld beads. It shall be appreciated that the DED weld beads are structural or microstructural features of the superalloy overlay 4 which correspond generally to the path followed by a directed energy beam along the exterior surface 9 of the piston body 2 during the manufacturing of the piston 10 and which comprise a welded combination of the steel piston form 3 and a superalloy applied to the steel piston form 3 during manufacturing.

As indicated by their successive numbering, DED weld beads 41a, 41b, ... 41n may be ordinally formed starting at a peripheral interface between the superalloy overlay that is being formed and the relief cut 4' defined in the piston 10, proceeding away from the peripheral interface, and ending at interior location of the relief cut 4' spaced apart from the peripheral interface. Such ordinal formation may have the effect of successively moving or walking any hardening of the underlying piston 10 away from the interface between the superalloy overlay and the relief cut 4' of the piston 10. As indicated by their successive numbering, DED weld beads 42a, 42b, ... 42n and DED weld beads 43a, 43b, ... 43n may be similarly ordinally formed which may further move or walk hardening of a heat affected zone of the underlying piston 10 away from the interface between the superalloy overlay and the relief cut 4' of the piston 10 as well as move or walk such hardening out of the underlying piston form in a vertical or normal direction.

Fig. 2A illustrates the relief cut 4' formed in an exterior surface of the land 11 of the piston 10 prior to application of the overlay 4. In the illustrated embodiment the relief cut 4' includes a sloped edge portion formed at an angle A which is preferably 45 degrees or greater, or more preferably 60 degrees or greater. Alternatively, the relief cut 4' may be a radiused relief with an edge to center angle comparable to the preferred or more preferred magnitudes of angle A.

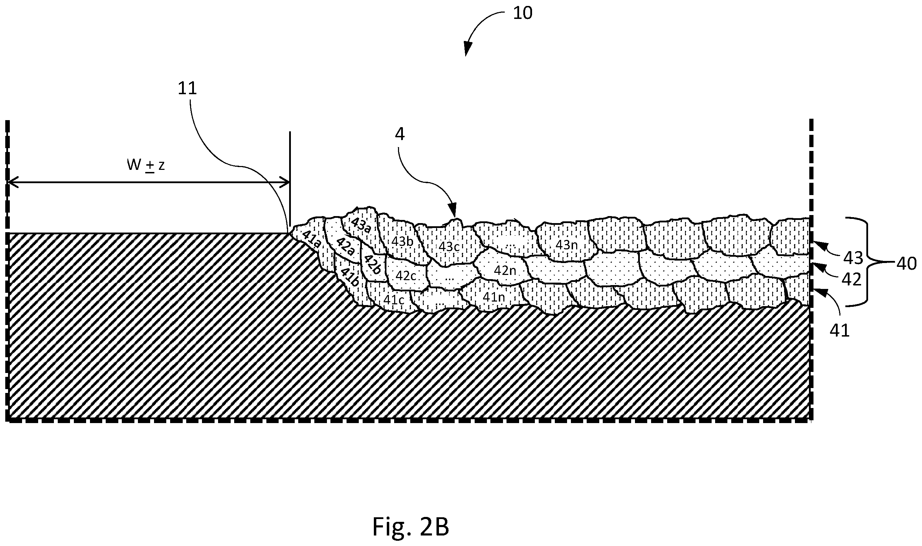

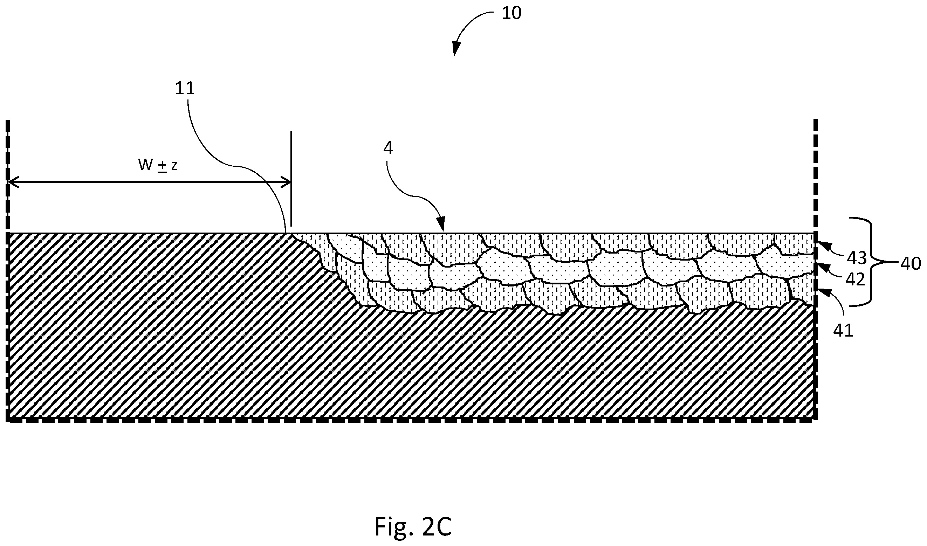

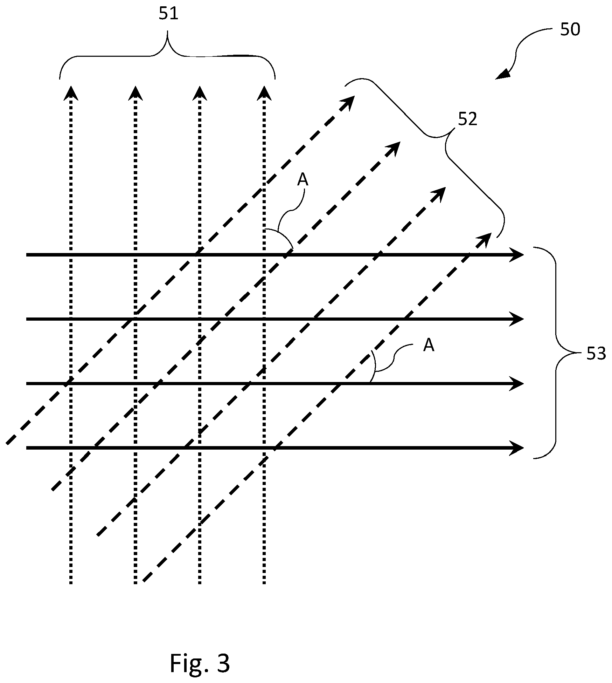

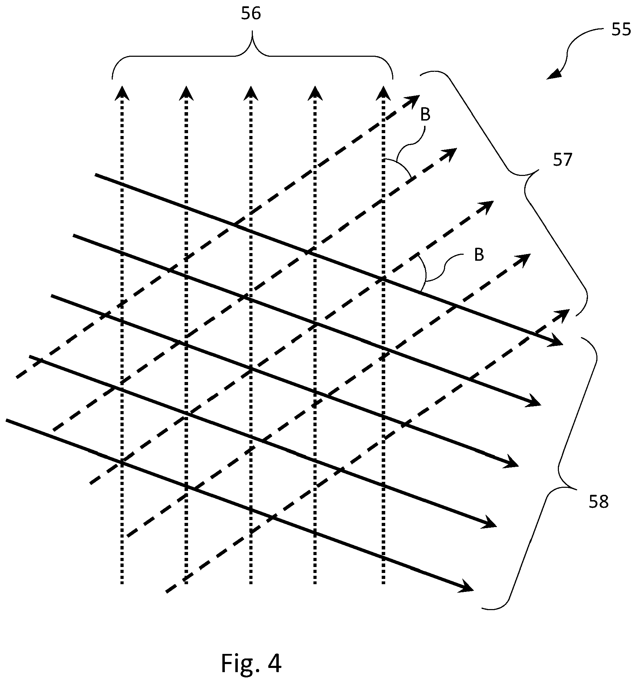

Fig. 2B illustrates the superalloy overlay 4 provided in the land 11 with the plurality of layers 40 by successive application of layers 41, 42, 43, and before any post-application processing. Fig. 2C illustrates the superalloy overlay 4 provided with the plurality of layers 40 by successive application of layers 41, 42, 43 and post-application processing which is effective to reduce the height of the plurality of layers 40 to be substantially aligned and continuous with the portion of land 11 which is not provided with the superalloy overlay 4. The post-application processing may include bead blasting, machining, re-melting, or other surface processing techniques as will occur to one of skill in the art with the benefit of the present disclosure. In Figs. 3 and 4, the portion of land 11 which is not provided with the superalloy overlay 4 may be selected to be a distance W with an error +/- z.

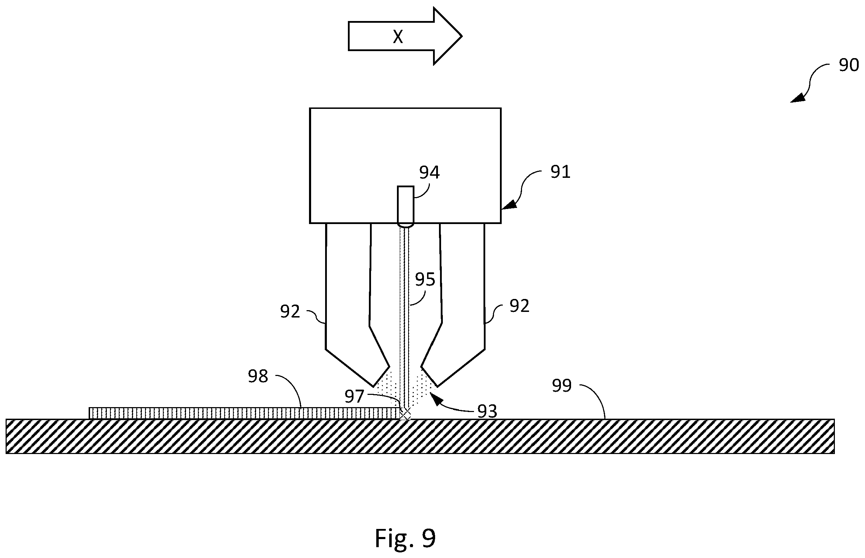

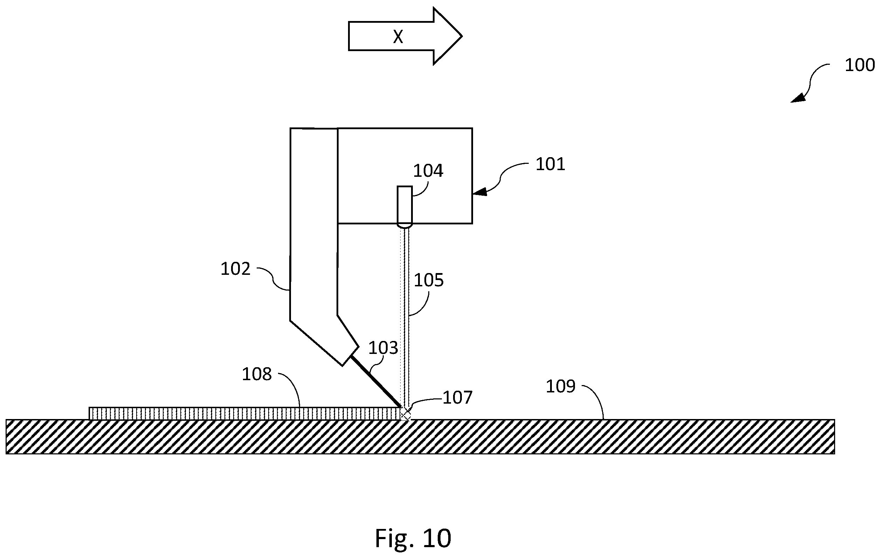

With reference to Fig. 3, there is illustrated an example multi-layer set of weld paths 50 which may be followed by a DED system (*e.g*., the DED systems described below in connection with Figs. 9 and 10) or another direct weld system to form a plurality of adjoining weld beads of a plurality of weld layers of a superalloy overlay. Weld paths 51 correspond to the formation of a first plurality of adjoining weld beads of a first weld layer of a superalloy overlay provided on a piston form. Weld paths 52 correspond to the formation of a second plurality of adjoining weld beads of a second weld layer of a superalloy overlay provided on the first weld layer and offset from the first weld layer by an angle A which is preferably at least +/- 45 degrees, but which may be other angles. Weld paths 53 correspond to the formation of a third plurality of adjoining weld beads of a third weld layer of a superalloy overlay provided on the second weld layer and offset from the second weld layer by the angle A or by a different angle greater than or less than angle A.

In some embodiments, a superalloy overlay having two weld layers may be provided by providing a first plurality of adjoining weld beads corresponding to weld path 51 and a second plurality of adjoining weld beads corresponding to weld path 52. In some such embodiments, weld beads corresponding to weld path 53 may be omitted and the superalloy overlay may have only or exactly two weld layers.

In some embodiments, a superalloy overlay having three weld layers may be provided by providing a first plurality of adjoining weld beads corresponding to weld path 51, a second plurality of adjoining weld beads corresponding to weld path 52, and a third plurality of adjoining weld beads corresponding to weld path 53. In some such embodiments, the superalloy overlay may have only or exactly three weld layers.

In some embodiments, a superalloy overlay having three or more weld layers may be provided by providing a first plurality of adjoining weld beads corresponding to weld path 51, a second plurality of adjoining weld beads corresponding to weld path 52, a third plurality of adjoining weld beads corresponding to weld path 53, and potentially one or more additional pluralities of adjoining weld beads.

With reference to Fig. 4, there is illustrated an example multi-layer set of weld paths 55 which may be followed by a DED system (*e.g*., the DED systems described below in connection with Figs. 9 and 10) or another direct weld system to form a plurality of adjoining weld beads of a plurality of weld layers of a superalloy overlay. Weld paths 56 correspond to the formation of a first plurality of adjoining weld beads of a first weld layer of a superalloy overlay provided on a piston form. Weld paths 57 correspond to the formation of a second plurality of adjoining weld beads of a second weld layer of a superalloy overlay provided on the first weld layer and offset from the first weld layer by an angle B which is preferably at least +/- 55 degrees but which may be other angles. Weld paths 58 correspond to the formation of a plurality of adjoining weld beads of a third weld layer of a superalloy overlay provided on the second weld layer and offset from the second weld layer by the angle A or by a different angle greater than or less than angle B.

In some embodiments, a superalloy overlay having two weld layers may be provided by providing a first plurality of adjoining weld beads corresponding to weld path 56 and a second plurality of adjoining weld beads corresponding to weld path 57. In some such embodiments, weld beads corresponding to weld path 58 may be omitted and the superalloy overlay may have only or exactly two weld layers.

In some embodiments, a superalloy overlay having three weld layers may be provided by providing a first plurality of adjoining weld beads corresponding to weld path 56, a second plurality of adjoining weld beads corresponding to weld path 57, and a third plurality of adjoining weld beads corresponding to weld path 58. In some such embodiments, the superalloy overlay may have only or exactly three weld layers.

In some embodiments, a superalloy overlay having three or more weld layers may be provided by providing a first plurality of adjoining weld beads corresponding to weld path 56, a second plurality of adjoining weld beads corresponding to weld path 57, a third plurality of adjoining weld beads corresponding to weld path 58, and potentially one or more additional pluralities of adjoining weld beads.

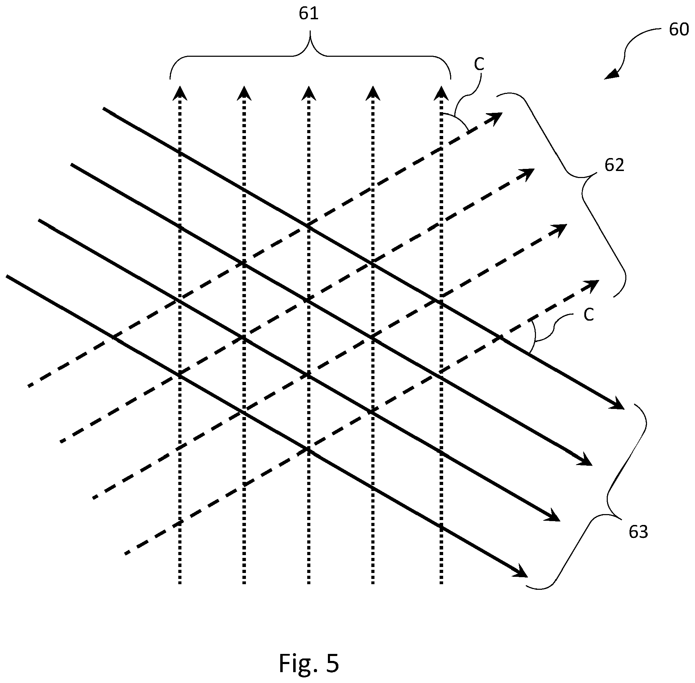

With reference to Fig. 5, there is illustrated an example multi-layer set of weld paths 60 which may be followed by a DED system (*e.g*., the DED systems described below in connection with Figs. 9 and 10) or another direct weld system to form a plurality of adjoining weld beads of a plurality of weld layers of a superalloy overlay. Weld paths 61 correspond to the formation of a first plurality of adjoining weld beads a first weld layer of a superalloy overlay provided on a piston form. Weld paths 62 correspond to the formation of a second plurality of adjoining weld beads of a second weld layer of a superalloy overlay provided on the first weld layer and offset from the first weld layer by an angle C which is preferably at least +/- 65 degrees but which may be other angles. Weld paths 63 correspond to the formation of a third plurality of adjoining weld beads of a third weld layer of a superalloy overlay provided on the second weld layer and offset from the second weld layer by the angle C or by a different angle greater than or less than angle C.

In some embodiments, a superalloy overlay having two weld layers may be provided by providing a first plurality of adjoining weld beads corresponding to weld path 61 and a second plurality of adjoining weld beads corresponding to weld path 62. In some such embodiments, weld beads corresponding to weld path 63 may be omitted and the superalloy overlay may have only or exactly two weld layers.

In some embodiments, a superalloy overlay having three weld layers may be provided by providing a first plurality of adjoining weld beads corresponding to weld path 61, a second plurality of adjoining weld beads corresponding to weld path 62, and a third plurality of adjoining weld beads corresponding to weld path 63. In some such embodiments, the superalloy overlay may have only or exactly three weld layers.

In some embodiments, a superalloy overlay having three or more weld layers may be provided by providing a first plurality of adjoining weld beads corresponding to weld path 61, a second plurality of adjoining weld beads corresponding to weld path 62, a third plurality of adjoining weld beads corresponding to weld path 63, and potentially one or more additional pluralities of adjoining weld beads.

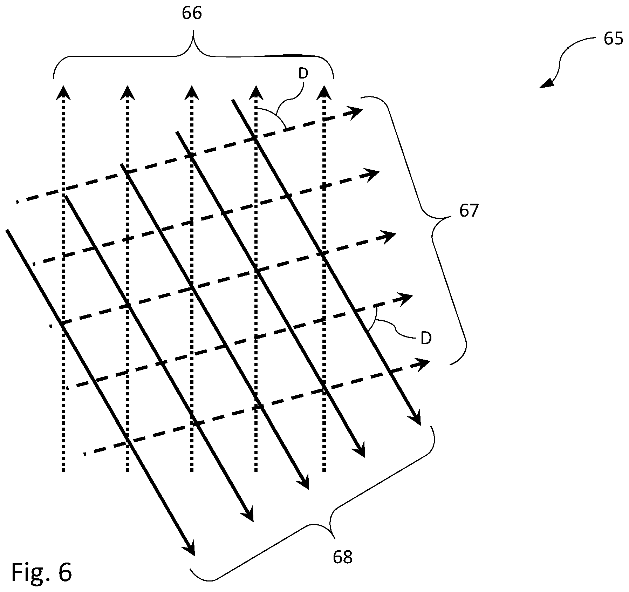

With reference to Fig. 6, there is illustrated an example multi-layer set of direct weld paths 65 which may be followed by a DED system (*e.g*., the DED systems described below in connection with Figs. 9 and 10) or another direct weld system to form a plurality of adjoining weld beads of a plurality of weld layers of a superalloy overlay. Weld paths 66 correspond to the formation of a first plurality of adjoining weld beads of a first weld layer of a superalloy overlay provided on a piston form. Weld paths 67 correspond to the formation of a second plurality of adjoining weld beads of a second weld layer of a superalloy overlay provided on the first weld layer and offset from the first weld layer by an angle D which is preferably at least +/- 75 degrees but which may be other angles. Weld paths 68 correspond to the formation of a third plurality of adjoining weld beads of a third weld layer of a superalloy overlay provided on the second weld layer and offset from the second weld layer by the angle D or by a different angle greater than or less than angle D.

In some embodiments, a superalloy overlay having two weld layers may be provided by providing a first plurality of adjoining weld beads corresponding to weld path 66 and a second plurality of adjoining weld beads corresponding to weld path 67. In some such embodiments, weld beads corresponding to weld path 68 may be omitted and the superalloy overlay may have only or exactly two weld layers.

In some embodiments, a superalloy overlay having three weld layers may be provided by providing a first plurality of adjoining weld beads corresponding to weld path 66, a second plurality of adjoining weld beads corresponding to weld path 67, and a third plurality of adjoining weld beads corresponding to weld path 68. In some such embodiments, the superalloy overlay may have only or exactly three weld layers.

In some embodiments, a superalloy overlay having three or more weld layers may be provided by providing a first plurality of adjoining weld beads corresponding to weld path 66, a second plurality of adjoining weld beads corresponding to weld path 67, a third plurality of adjoining weld beads corresponding to weld path 68, and potentially one or more additional pluralities of adjoining weld beads.

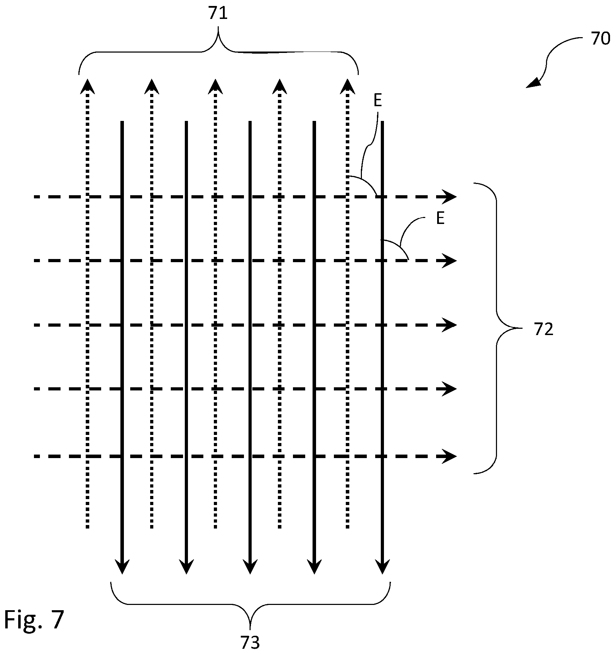

With reference to Fig. 7, there is illustrated an example multi-layer set of direct weld paths 70 which may be followed by a DED system (e.g., the DED systems described below in connection with Figs. 9 and 10) or another direct weld system to form a plurality of adjoining weld beads of a plurality of weld layers of a superalloy overlay. Weld paths 71 correspond to the formation of a first plurality of adjoining weld beads of a first layer of a superalloy overlay provided on a piston form. Weld paths 72 correspond to the formation of a second plurality of adjoining weld beads of a second weld layer of a superalloy overlay provided on the first layer and offset from the first layer by an angle E which is preferably +/- 90 degrees but which may be +/- 80 degrees, +/- 85 degrees, or other angles. Weld paths 73 correspond to the formation of a third plurality of adjoining weld beads of a third weld layer of a superalloy overlay provided on the second weld layer and offset from the second weld layer by the angle E or by a different angle greater than or less than angle E.

In some embodiments, a superalloy overlay having two weld layers may be provided by providing a first plurality of adjoining weld beads corresponding to weld path 71 and a second plurality of adjoining weld beads corresponding to weld path 72. In some such embodiments, weld beads corresponding to weld path 73 may be omitted and the superalloy overlay may have only or exactly two weld layers.

In some embodiments, a superalloy overlay having three weld layers may be provided by providing a first plurality of adjoining weld beads corresponding to weld path 71, a second plurality of adjoining weld beads corresponding to weld path 72, and a third plurality of adjoining weld beads corresponding to weld path 73. In some such embodiments, the superalloy overlay may have only or exactly three weld layers.

In some embodiments, a superalloy overlay having three or more weld layers may be provided by providing a first plurality of adjoining weld beads corresponding to weld path 71, a second plurality of adjoining weld beads corresponding to weld path 72, a third plurality of adjoining weld beads corresponding to weld path 73, and potentially one or more additional pluralities of adjoining weld beads.

It shall be appreciated that angles of +/- n degrees where n is a number indicate that the angle may extend in either a clockwise or counterclockwise direction. It shall be appreciated that an angle of +/- 90 degrees may be considered a maximum offset of weld paths and resulting weld beads of a given layer as angles greater than +/- 90 degrees are redundant of angles less than +/- 90 degrees. It shall also be appreciated that the technical effect of providing the preferred forms of angles A, B, C, D, or E of the foregoing embodiments includes improving the durability, heat resistance, and/or resistance to separation of the superalloy overlay and the underlying substrate.

While the aforementioned multi-layer weld paths of Figs. 3-7 is illustrated as including a certain number of weld paths in each weld layer, it shall be appreciated that each weld layer of weld paths may include any number of weld paths conforming to an area which is to be cladded with a superalloy overlay. Additionally, the illustrated multi-layer weld paths of Figs. 3-7 comprise three weld layers in the illustrated examples a greater or lesser number of weld layers may be provided in other embodiments. Furthermore, while each weld layer of the weld paths is illustrated as comprising a number of generally straight parallel weld paths, it shall be appreciated that each weld layer of the weld paths may comprise adjoining curved paths such as curved paths corresponding to a plurality of parallel curves.

As illustrated in Figs. 3-7, at least a portion of a first plurality of adjoining weld beads of a first weld layer may be offset at an angle relative to at least a portion of a second plurality of adjoining weld beads of a second weld layer disposed on the first weld layer. In some forms, said portion of the first plurality of adjoining weld beads may be arranged in first parallel lines, and said portion of the second plurality of adjoining weld beads may be arranged in second parallel lines. In such forms, the angle at which the first plurality of adjoining weld beads is offset relative to the second plurality of adjoining weld beads may correspond to an offset relationship of the first parallel lines and the second parallel lines.

In some forms, said portion of the first plurality of adjoining weld beads may be arranged in first parallel curves, and said portion of the second plurality of adjoining weld beads may be arranged in second parallel curves. In such forms, the angle at which the first plurality of adjoining weld beads is offset relative to the second plurality of adjoining weld beads may correspond to an offset relationship of a tangent of the first parallel curves and a tangent of the second parallel curves.

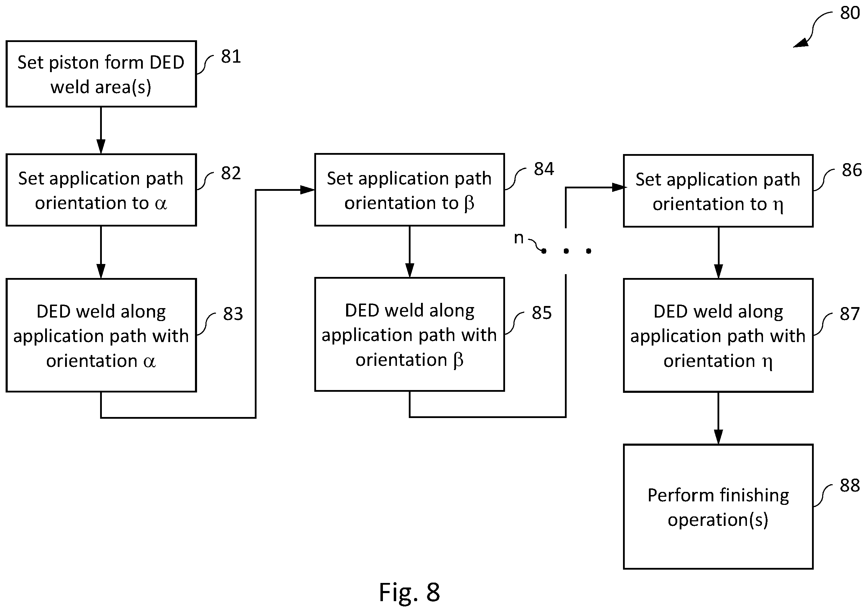

With reference to Fig. 8, there is illustrated a flowchart of an example process 80 for manufacturing a piston according to the present disclosure. Process 80 begins at operation 81 wherein a piston form (*e.g.,* a piston form comprising or consisting of steel, such as 4140 steel) is provided and one or more areas of the piston form are set or selected for direct welding of a superalloy.

From operation 81, process 80 proceeds to operation 82 which sets a first application path over at least a portion of the set or selected area of the piston form oriented at a first angle α. From operation 82, process 80 proceeds to operation 83 which performs a DED weld operation (or another direct weld operation) (or another direct weld operation) along the first application path over at least a portion of the set or selected area of the piston form oriented at a first angle α.

From operation 83, process 80 proceeds to operation 84 which sets a second application path over at least a portion of the set or selected area of the piston form oriented at a second angle β which is offset from the first angle by a predetermined magnitude, for example, 65 degrees offset or greater. From operation 84, process 80 proceeds to operation 85 which performs a DED weld operation (or another direct weld operation) along the second application path over at least a portion of the set or selected area of the piston form oriented at a second angle β.

As indicated by ellipsis n, process 80 may include additional analogous DED operations, such as operations 86 and 87. Thus, for example, from operation 85, process 80 proceeds to operation 86 which sets a third application path over at least a portion of the set or selected area of the piston form oriented at an angle η which is offset from the prior angle (e.g., the second angle) by a predetermined magnitude, for example, 65 degrees offset or greater. From operation 86, process 80 proceeds to operation 87 which performs a DED weld operation (or another direct weld operation) along the third application path over at least a portion of the set or selected area of the piston form oriented at the angle η.

Once all additional analogous DED operations have been performed. The process 80 proceeds to operation 88 where one or more finishing operations are performed. The finishing operations may comprise bead blasting, machining, re-melting, or other surface processing techniques as will occur to one of skill in the art with the benefit of the present disclosure.

With reference to Fig. 9, there is illustrated an example directed energy deposition (DED) system 90 including moveable DED head 91 comprising a material feeder 92 configured to direct a superalloy material 93 toward a workpiece 99 and a directed energy emitter 94 configured to direct an energy beam 95 to a melt region 97 comprising a melted combination of the material 93 and the workpiece 99. The moveable DED head 91 is moveable relative to the workpiece 99 in the direction indicated by arrow X. As the moveable DED head 91 is so moved, the melt region 97 advances along the workpiece 99 in generally the same direction, and a DED weld bead 98 is thereby formed in the wake of the melt region 97 as by freezing of the melted combination of the material 93 and the workpiece 99.

In the example of Fig. 9, the material feeder 92 is configured as a feeder nozzle adapted to supply a mixture of powdered superalloy material and inter gas. The directed energy emitter is configured as a laser. The workpiece 99 is provided as a steel piston form of the type described hereinabove. The superalloy material 93 is provided of the type described hereinabove.

With reference to Fig. 10, there is illustrated an example directed energy deposition (DED) system 100 including moveable DED head 101 comprising a material feeder 102 configured to direct a superalloy material 103 toward a workpiece 109 and a directed energy emitter 104 configured to direct an energy beam 105 to a melt region 107 comprising a melted combination of the superalloy material 103 and the workpiece 109. The moveable DED head 101 is moveable relative to the workpiece 109 in the direction indicated by arrow X. As the moveable DED head 101 is so moved, the melt region 107 advances along the workpiece 109 in generally the same direction, and a DED weld bead 108 is thereby formed in the wake of the melt region 107 as by freezing of the melted combination of the superalloy material 103 and the workpiece 109.

In the example of Fig. 9, the material feeder 92 is configured as a wire feeder adapted to supply superalloy wire material. The directed energy emitter is configured as an electron beam. The workpiece 109 is provided as a steel piston form of the type described hereinabove. The superalloy material 103 is provided of the type described hereinabove.

According to the present invention, a plurality of heat affected zones of the piston form underlying the first weld layer that were hardened by welding of each of the first plurality of adjoining weld beads are tempered by a positioning of adjoining ones of the first plurality of adjoining weld beads.

According to the present invention, the method comprises the step of first successively welding the first plurality of adjoining superalloy weld beads comprises first hardening a respective heat affected zone of the piston form during welding of each of the first plurality of adjoining weld beads and thereafter tempering at least a portion of the respective heat affected zone during welding of an adjoining one of the first plurality of adjoining superalloy weld beads.

While example embodiments of the present invention have been illustrated and described in detail in the drawings and foregoing description, the same is to be considered as illustrative and not restrictive in character, it being understood that only certain example embodiments have been shown and described and that all changes and modifications that fall under the scope of the present invention are defined in the appended claims.

## Claims

1. A piston for a reciprocating piston engine, the piston comprising:
a piston body comprising a piston form and a superalloy overlay cladding and metallurgically bonded with a portion of the piston form,
and being **characterised by**:
the superalloy overlay comprising a first weld layer disposed on the piston form and comprising a first plurality of adjoining weld beads and a second weld layer disposed on the first weld layer and comprising a second plurality of adjoining weld beads, wherein a plurality of heat affected zones of the piston form underlying the first weld layer that were hardened by welding of each of the first plurality of adjoining weld beads are tempered by a positioning of adjoining ones of the first plurality of adjoining weld beads.

2. The piston of claim 1, wherein the first plurality of adjoining weld beads are formed in partial overlap with respective neighboring weld beads.

3. The piston of claim 1, wherein the first plurality of weld beads are ordinally formed starting at a peripheral interface between the superalloy overlay and a relief cut defined in the piston form and ending at an interior location of the relief cut spaced apart from the peripheral interface.

4. The piston of claim 3, wherein the peripheral interface is located on a cylindrical side surface of the piston form.

5. The piston of claim 1, wherein the piston form has an exterior surface including a top surface portion and a side surface portion extending downward from the top surface portion, and the superalloy overlay clads at least a portion of the side surface portion and at least a portion of the top surface portion.

6. The piston of claim 5, wherein the superalloy overlay clads substantially the entire top surface portion.

7. The piston of claim 1, wherein the first plurality of weld beads are offset at an angle relative to the second plurality of weld beads.

8. The piston of claim 1, wherein the plurality of heat affected zones are further tempered by a positioning of the second weld layer.

9. The piston of claim8, wherein the plurality of heat affected zones are further by a direction of directed energy to the second weld layer without addition of superalloy material.

10. The piston of any one of claims 1-9, wherein at least a portion of the superalloy overlay is provided in a relief cut formed in the piston form, the relief cut includes one of a radiused cut and a sloped cut with an incline of 45 degrees or less, and first plurality of weld beads are formed starting at an interface between the superalloy overlay and the relief cut and proceeding successively away from the interface.

11. A method of manufacturing a piston for a reciprocating piston engine, the method being **characterised by** the following steps:
first successively welding a first plurality of adjoining superalloy weld beads onto a piston form to provide a first superalloy weld layer; and
second successively welding a second plurality of adjoining superalloy weld beads onto the first plurality of superalloy weld beads to provide a second superalloy weld layer,
wherein first successively welding the first plurality of adjoining superalloy weld beads comprises first hardening a respective heat affected zone of the piston form during welding of each of the first plurality of adjoining weld beads and thereafter tempering at least a portion of the respective heat affected zone during welding of an adjoining one of the first plurality of adjoining superalloy weld beads.

12. The method of claim 11, wherein at least one of:
the first successively welding includes welding successive ones the first plurality of adjoining superalloy weld beads in partial overlap with respective neighboring adjoining superalloy weld beads,
the first successively welding includes welding successive ones of the first plurality of adjoining superalloy weld beads in an order starting at a peripheral interface with the piston form and proceeding away from the peripheral interface in succession,
the second successively welding includes welding the second plurality of adjoining superalloy weld beads at an angle offset from the first plurality of adjoining superalloy weld beads.

13. The method of claim 11, comprising further tempering the heat affected zone of the piston form underlying the first weld layer during welding of the second weld layer, and further tempering the heat affected zone of the piston form underlying the first weld layer is after welding of the second weld layer by applying directed energy to the second weld layer without addition of superalloy material.

## Patentansprüche

1. Kolben für einen Hubkolbenmotor, wobei der Kolben Folgendes umfasst:
einen Kolbenkörper, umfassend eine Kolbenform und eine Superlegierungsüberlagerungsplattierung, die mit einem Abschnitt der Kolbenform metallurgisch gebunden ist,
und **dadurch gekennzeichnet ist, dass**:
die Superlegierungsüberlagerung eine erste Schweißschicht, die auf der Kolbenform angeordnet ist und eine erste Vielzahl von angrenzenden Schweißraupen umfasst, und eine zweite Schweißschicht umfasst, die auf der ersten Schweißschicht angeordnet ist und eine zweite Vielzahl von angrenzenden Schweißraupen umfasst, wobei eine Vielzahl von wärmebeeinflussten Zonen der Kolbenform, die unter der ersten Schweißschicht liegen und durch Schweißen jeder der ersten Vielzahl von angrenzenden Schweißraupen gehärtet wurden, durch ein Positionieren von angrenzenden der ersten Vielzahl von angrenzenden Schweißraupen temperiert wird.

2. Kolben nach Anspruch 1, wobei die erste Vielzahl von angrenzenden Schweißraupen in teilweiser Überlappung mit jeweiligen benachbarten Schweißraupen ausgebildet ist.

3. Kolben nach Anspruch 1, wobei die erste Vielzahl von Schweißraupen in geordneter Weise ausgebildet ist, beginnend an einer Umfangsgrenzfläche zwischen der Superlegierungsüberlagerung und einem Entlastungsschnitt, der in der Kolbenform definiert ist, und endend an einer inneren Stelle des Entlastungsschnitts, die von der Umfangsgrenzfläche beabstandet ist.

4. Kolben nach Anspruch 3, wobei sich die Umfangsgrenzfläche auf einer zylindrischen Seitenoberfläche der Kolbenform befindet.

5. Kolben nach Anspruch 1, wobei die Kolbenform eine äußere Oberfläche einschließlich eines oberen Oberflächenabschnitts und eines seitlichen Oberflächenabschnitts hat, der sich von dem oberen Oberflächenabschnitt nach unten erstreckt, und die Superlegierungsüberlagerung mindestens einen Abschnitt des seitlichen Oberflächenabschnitts und mindestens einen Abschnitt des oberen Oberflächenabschnitts bedeckt.

6. Kolben nach Anspruch 5, wobei die Superlegierungsüberlagerung im Wesentlichen den gesamten oberen Oberflächenabschnitt bedeckt.

7. Kolben nach Anspruch 1, wobei die erste Vielzahl von Schweißraupen in einem Winkel relativ zu der zweiten Vielzahl von Schweißraupen versetzt ist.

8. Kolben nach Anspruch 1, wobei die Vielzahl der wärmebeeinflussten Zonen ferner durch ein Positionieren der zweiten Schweißlage temperiert ist.

9. Kolben nach Anspruch 8, wobei die Vielzahl der wärmebeeinflussten Zonen ferner durch eine Richtung von gerichteter Energie auf die zweite Schweißlage ohne Zugabe von Superlegierungsmaterial ist.

10. Kolben nach einem der Ansprüche 1 bis 9, wobei mindestens ein Abschnitt der Superlegierungsüberlagerung in einem Entlastungsschnitt, der in der Kolbenform ausgebildet ist, bereitgestellt ist, wobei der Entlastungsschnitt entweder einen gerundeten Schnitt oder einen schrägen Schnitt mit einer Neigung von 45 Grad oder weniger einschließt und eine erste Vielzahl von Schweißraupen ausgebildet wird, die an einer Grenzfläche zwischen der Superlegierungsüberlagerung und dem Entlastungsschnitt beginnen und nacheinander von der Grenzfläche weg verlaufen.

11. Verfahren zum Herstellen eines Kolbens für einen Hubkolbenmotor, wobei das Verfahren durch die folgenden Schritte gekennzeichnet ist:
erstes aufeinanderfolgendes Schweißen einer ersten Vielzahl von angrenzenden Superlegierungsschweißraupen auf eine Kolbenform, um eine erste Superlegierungsschweißschicht bereitzustellen; und
zweites aufeinanderfolgendes Schweißen einer zweiten Vielzahl von angrenzenden Superlegierungsschweißraupen auf die erste Vielzahl von Superlegierungsschweißraupen, um eine zweite Superlegierungsschweißschicht bereitzustellen,
wobei das erste aufeinanderfolgende Schweißen der ersten Vielzahl von angrenzenden Superlegierungsschweißraupen zunächst das Härten einer jeweiligen wärmebeeinflussten Zone der Kolbenform während des Schweißens jeder der ersten Vielzahl von angrenzenden Schweißraupen und danach das Temperieren mindestens eines Abschnitts der jeweiligen wärmebeeinflussten Zone während des Schweißens einer angrenzenden der ersten Vielzahl von angrenzenden Superlegierungsschweißraupen umfasst.

12. Verfahren nach Anspruch 11, wobei mindestens eines von:
das erste aufeinanderfolgende Schweißen schließt das Schweißen aufeinanderfolgender der ersten Vielzahl angrenzender Superlegierungsschweißraupen in teilweiser Überlappung mit jeweiligen benachbarten angrenzenden Superlegierungsschweißraupen ein,
das erste aufeinanderfolgende Schweißen schließt das Schweißen aufeinanderfolgender der ersten Vielzahl angrenzender Superlegierungsschweißraupen in einer Reihenfolge ein, die an einer Umfangsgrenzfläche mit der Kolbenform beginnt und nacheinander von der Umfangsgrenzfläche weg verläuft,
das zweite aufeinanderfolgende Schweißen das Schweißen der zweiten Vielzahl angrenzender Superlegierungsschweißraupen in einem Winkel einschließt, der gegenüber der ersten Vielzahl angrenzender Superlegierungsschweißraupen versetzt ist.

13. Verfahren nach Anspruch 11, umfassend das weitere Temperieren der wärmebeeinflussten Zone der Kolbenform, die unter der ersten Schweißschicht liegt, während des Schweißens der zweiten Schweißschicht, und das weitere Temperieren der wärmebeeinflussten Zone der Kolbenform, die unter der ersten Schweißschicht liegt, nach dem Schweißen der zweiten Schweißschicht durch Aufbringen gerichteter Energie auf die zweite Schweißschicht ohne Zugabe von Superlegierungsmaterial erfolgt.

## Revendications

1. Piston destiné à un moteur à piston alternatif, le piston comprenant :
un corps de piston comprenant une forme de piston et un placage de recouvrement en superalliage et métallurgiquement lié à une partie de la forme de piston,
et étant **caractérisé en ce que** :
le recouvrement en superalliage comprend une première couche de soudure disposée sur la forme de piston et comprenant une première pluralité de cordons de soudure juxtaposés et comprend une deuxième couche de soudure disposée sur la première couche de soudure et comprenant une deuxième pluralité de cordons de soudure juxtaposés, une pluralité de zones thermiquement affectées de la forme de piston sous-jacente à la première couche de soudure qui ont été durcies par soudage de chacun de la première pluralité de cordons de soudure juxtaposés étant revenus par un positionnement de cordons juxtaposés de la première pluralité de cordons de soudure juxtaposés.

2. Piston selon la revendication 1, dans lequel la première pluralité de cordons de soudure juxtaposés sont formés avec un recouvrement partiel par rapport aux cordons de soudure voisins.

3. Piston selon la revendication 1, dans lequel la première pluralité de cordons de soudure sont dans l'ordre formés en partant d'une interface périphérique entre le recouvrement en superalliage et une découpe en relief définie dans la forme de piston et en terminant au niveau d'un emplacement intérieur de la découpe en relief espacé de l'interface périphérique.

4. Piston selon la revendication 3, dans lequel l'interface périphérique se situe sur une surface latérale cylindrique de la forme de piston.

5. Piston selon la revendication 1, dans lequel la forme de piston a une surface extérieure incluant une partie surface supérieure et une partie surface latérale s'étendant vers le bas depuis la partie surface supérieure, et le recouvrement en superalliage plaque au moins une partie de la partie surface latérale et au moins une partie de la partie surface supérieure.

6. Piston selon la revendication 5, dans lequel le recouvrement en superalliage plaque sensiblement la totalité de la partie surface supérieure.

7. Piston selon la revendication 1, dans lequel la première pluralité de cordons de soudure sont décalés selon un angle par rapport à la deuxième pluralité de cordons de soudure.

8. Piston selon la revendication 1, dans lequel la pluralité de zones thermiquement affectées sont en outre revenues par un positionnement de la deuxième couche de soudure.

9. Piston selon la revendication 8, dans lequel la pluralité de zones thermiquement affectées sont davantage par une orientation d'énergie dirigée vers la deuxième couche de soudure sans ajout d'un matériau de superalliage.

10. Piston selon l'une quelconque des revendications 1 à 9, dans lequel au moins une partie du recouvrement en superalliage est fournie dans une découpe en relief formée dans la forme de piston, la découpe en relief inclut l'une d'une découpe arrondie et d'une découpe inclinée avec une inclinaison inférieure ou égale à 45 degrés, et la première pluralité de cordons de soudure sont formés en partant d'une interface entre le recouvrement en superalliage et la découpe en relief et progressent successivement en s'éloignant de l'interface.

11. Procédé de fabrication d'un piston destiné à un moteur à piston alternatif, le procédé étant **caractérisé par** les étapes suivantes :
premier soudage successif d'une première pluralité de cordons de soudure de superalliage juxtaposés sur une forme de piston pour fournir une première couche de soudure en superalliage ; et
deuxième soudage successif d'une deuxième pluralité de cordons de soudure de superalliage juxtaposés sur la première pluralité de cordons de soudure de superalliage pour fournir une deuxième couche de soudure en superalliage,
le premier soudage successif de la première pluralité de cordons de soudure de superalliage juxtaposés comprenant un premier durcissement d'une zone thermiquement affectée respective de la forme de piston durant le soudage de chacun de la première pluralité de cordons de soudure juxtaposés puis revenu d'au moins une partie de la zone thermiquement affectée respective durant le soudage d'un cordon juxtaposé de la première pluralité de cordons de soudure de superalliage juxtaposés.

12. Procédé selon la revendication 11, dans lequel au moins l'un parmi :
le premier soudage successif inclut le soudage de cordons successifs de la première pluralité de cordons de soudure de superalliage juxtaposés en recouvrement partiel par rapport aux cordons de soudure de superalliage juxtaposés voisins,
le premier soudage successif inclut le soudage de cordons successifs de la première pluralité de cordons de soudure de superalliage juxtaposés dans un ordre commençant au niveau d'une interface périphérique avec la forme de piston et se poursuivant en s'éloignant de l'interface périphérique successivement,
le deuxième soudage successif inclut le soudage de la deuxième pluralité de cordons de soudure de superalliage juxtaposés selon un angle décalé par rapport à la première pluralité de cordons de soudure de superalliage juxtaposés.

13. Procédé selon la revendication 11, comprenant en outre un revenu de la zone thermiquement affectée de la forme de piston sous-jacente à la première couche de soudure durant le soudage de la deuxième couche de soudure, et le revenu supplémentaire de la zone thermiquement affectée de la forme de piston sous-jacente à la première couche de soudure a lieu après le soudage de la deuxième couche de soudure par application d'énergie dirigée vers la deuxième couche de soudure sans ajout de matériau de superalliage.
